(19) Europäisches Patentamt / European Patent Office / Office européen des brevets

(11) **EP 2 334 021 B1**

(12) **FASCICULE DE BREVET EUROPEEN**

(45) Date de publication et mention de la délivrance du brevet:
**09.01.2019   Bulletin 2019/02**

(51) Int Cl.:
*H04L 27/26* (2006.01)   *H04L 1/00* (2006.01)

(21) Numéro de dépôt: **10193758.9**

(22) Date de dépôt: **06.12.2010**

(54) **Méthode d'estimation aveugle de paramètres ofdm par adaptation de covariance**

Blindschätzmethode der OFDM-Modulationsparameter durch adaptiven Kovarianz

Method for the blind estimation of ofdm signal parameters through adaptive covariance

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2009   FR 0958910**

(43) Date de publication de la demande:
**15.06.2011   Bulletin 2011/24**

(73) Titulaire: **Commissariat à l'Énergie Atomique et aux Énergies Alternatives 75015 Paris (FR)**

(72) Inventeurs:
- **Bouzegzi, Abdelaziz 69003 Lyon (FR)**
- **Jallon, Pierre 38100 Grenoble (FR)**

(74) Mandataire: **Augarde, Eric Brevalex 56 Boulevard de l'Embouchure, Bât. B B.P. 27519 31075 Toulouse Cedex 2 (FR)**

(56) Documents cités:

- RIBA J ET AL: "Parameter estimation of binary CPM signals", 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US, 7 mai 2001 (2001-05-07), pages 2561-2564, XP010803251, ISBN: 978-0-7803-7041-8
- VILLARES J ET AL: "Sample covariance matrix based parameter estimation for digital synchronization", GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US LNKD- DOI:10.1109/GLOCOM.2002.1188122, vol. 1, 17 novembre 2002 (2002-11-17), pages 463-467, XP010635994, ISBN: 978-0-7803-7632-8
- BOUZEGZI A ET AL: "New algorithms for blind recognition of OFDM based systems", SIGNAL PROCESSING, ELSEVIER SCIENCE PUBLISHERS B.V. AMSTERDAM, NL LNKD-DOI:10.1016/J.SIGPRO.2009.09.017, vol. 90, no. 3, 1 mars 2010 (2010-03-01), pages 900-913, XP026748118, ISSN: 0165-1684 [extrait le 2009-09-23]
- CARLOS MOSQUERA ET AL: "Non-Data-Aided Symbol Rate Estimation of Linearly Modulated Signals", IEEE TRANSACTIONS ON SIGNAL PROCESSING, IEEE SERVICE CENTER, NEW YORK, NY, US, vol. 56, no. 2, 1 February 2008 (2008-02-01), pages 664-674, XP011198094, ISSN: 1053-587X, DOI: 10.1109/TSP.2007.907888

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne une méthode d'estimation de paramètres de modulation OFDM (*Orthogonal Frequency Division Multiplex*). Elle trouve à s'appliquer particulièrement dans les systèmes de télécommunication opportunistes (*Cognitive Radio*).

**ÉTAT DE LA TECHNIQUE ANTÉRIEURE**

La modulation OFDM est bien connue de l'état de la technique et est employée dans de nombreux systèmes de télécommunication tels que DVB-T, ADSL, Wi-Fi (IEEE 802 a/g), WiMax (IEEE 802.16). Elle présente l'avantage d'une bonne efficacité spectrale et d'une bonne protection contre les évanouissements sélectifs en fréquence.

On rappelle que dans un système OFDM, les symboles d'information à transmettre sont groupés par blocs de $N$ symboles, où $N$ est généralement une puissance de 2, les symboles OFDM étant obtenus en effectuant une IFFT (*Inverse Fast Fourier Transform*) sur lesdits blocs de symboles d'information. Généralement, un préfixe cyclique est rajouté au début de chaque symbole OFDM pour absorber l'interférence inter-symbole ou ISI et faciliter l'égalisation à la réception. Le signal OFDM constitué par ces symboles OFDM peut être éventuellement ensuite translaté en fréquence.

De manière générale, le signal émis par un système OFDM peut être représenté en bande de base par :

$$s_a(t) = \frac{\sqrt{E}}{N} \sum_k \sum_{n=0}^{N-1} a_{k,n} e^{-2i\pi \frac{n}{NT_c}(t-DT_c-kT_s)} g_a(t-kT_s) \qquad (1)$$

où $E$ est la puissance du signal, $N$ est le nombre de porteuses du multiplex OFDM, $a_{k,n}$ sont les symboles d'information relatifs au bloc $k$, appartenant à un alphabet de modulation $M$-aire, typiquement BPSK, QPSK ou QAM, $1/T_c$ est le débit des symboles d'information où $T_c$ est le temps « bribe » ou « chip », $T_s$ est la durée totale du symbole OFDM avec $T_s=(N+D)T_c$, où $D$ est la taille du préfixe cyclique exprimée en nombre de bribes, $g_a(t)$ est la réponse impulsionnelle du filtre de mise en forme des symboles OFDM, de support temporel $[0,T_s]$, destinée à apodiser le spectre du signal.

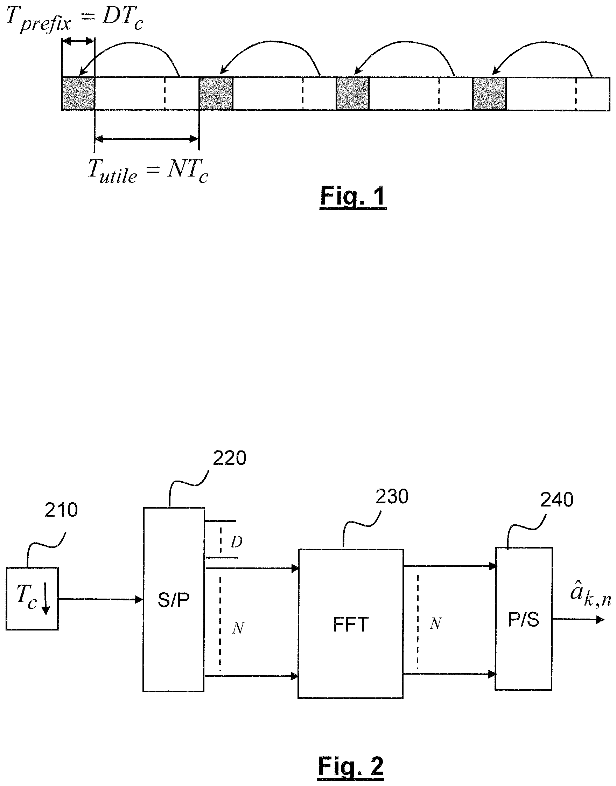

On a représenté de manière schématique un signal OFDM en Fig. 1. Il est constitué d'une séquence de symboles OFDM, chaque symbole présentant une durée totale $(N+D)T_c$ dont une durée utile $NT_c$ et un intervalle de garde de durée $T_{prefix}=DT_c$, contenant le préfixe cyclique. On rappelle que, de manière classique, le préfixe cyclique est une copie de la fin du symbole OFDM à l'intérieur de l'intervalle de garde. Dans certains systèmes OFDM, les préfixes cycliques sont simplement omis, autrement dit les parties utiles des symboles sont séparées par des intervalles de garde « vides ». Cette technique de transmission permet aussi d'éliminer l'interférence intersymbole mais rend plus complexe l'égalisation du signal.

Après propagation dans le canal de transmission, le signal OFDM reçu par le récepteur peut s'exprimer par :

$$y_a(t) = h \otimes s_a(t) + b(t) \qquad (2)$$

où $h \otimes s_a$ est la convolution entre le signal OFDM émis, $s_a(t)$ et la réponse impulsionnelle du canal de transmission $h(t)$, et $b(t)$ est une fonction aléatoire décrivant le bruit. On supposera que la longueur de la réponse impulsionnelle du canal est inférieure à la durée de l'intervalle de garde, de sorte que l'on pourra faire abstraction de l'interférence intersymbole (ISI).

La Fig. 2 représente de manière schématique la structure d'un récepteur OFDM.

Après éventuelle démodulation en bande de base, le signal reçu est échantillonné en 210 à la fréquence chip, puis les échantillons sont soumis à une conversion série/parallèle en 220 pour former des blocs de $N+D$ échantillons. Les $D$ premiers échantillons correspondant à l'intervalle de garde sont rejetés et le bloc des $N$ échantillons restants correspondant à la partie utile du symbole OFDM est soumis à une FFT en 230. Les symboles démodulés obtenus sont ensuite soumis à une conversion série en 240.

En définitive, en supposant que le récepteur est bien synchronisé en temps et en fréquence, les symboles démodulés peuvent s'exprimer par :

$$z_{k,n} = h_n a_{k,n} + b_{k,n} \qquad (3)$$

où $h_n$ est un coefficient complexe qui dépend de la réponse impulsionnelle du canal de transmission, et $b_{k,n}$ est une variable aléatoire représentant un échantillon de bruit.

Le bon fonctionnement de ce récepteur nécessite une synchronisation précise en temps et en fréquence. En effet, on comprend qu'une mauvaise synchronisation en temps entraînera un glissement temporel progressif de la fenêtre de troncation et une mauvaise synchronisation en fréquence, une rotation en phase des échantillons, pouvant être représentée par un facteur multiplicatif $e^{2i\pi\Delta fnT_c}$ où $\Delta f$ est l'offset de fréquence entre la fréquence de démodulation du récepteur et la fréquence porteuse du multiplex OFDM.

La synchronisation temporelle et fréquentielle du récepteur est généralement réalisée grâce à l'acquisition d'une séquence d'apprentissage.

Le bon fonctionnement du récepteur suppose également que l'on connaisse les paramètres de modulation du signal OFDM. Par paramètres de modulation, ou plus simplement paramètres OFDM, on entend ici la durée utile $NT_c$, la durée de l'intervalle de garde $DT_c$ et/ou la période de répétition $(N+D)T_c$ de ces symboles, ou bien encore l'inverse de ces valeurs. On notera à cet égard que $1/NT_c$ représente l'espacement entre sous-porteuses et $1/(N+D)T_c$ la fréquence symbole.

Bien souvent le récepteur ne connaît pas *a priori* les paramètres de modulation OFDM et doit donc procéder à leur estimation à l'aveugle avant de pouvoir démoduler le signal.

On connaît par ailleurs les systèmes radio opportuniste dont on trouvera une description dans la thèse fondatrice de J. Mitola intitulée « Cognitive radio : an integrated agent architecture for software defined radio », Royal Institute of Technology, Stockholm, PhD Dissertation, 8 Mai 2000. Lorsqu'un utilisateur primaire d'un tel système utilise une modulation OFDM (WiFi, Wi-Max, LTE, WRAN, 802.22, DVB-T etc.), un utilisateur secondaire, encore dénommé opportuniste, doit être en mesure de détecter si un signal OFDM est présent ou non dans une bande donnée, et par conséquent d'estimer un paramètre OFDM d'un tel signal.

Différentes méthodes ont été proposées pour estimer à l'aveugle les paramètres OFDM d'un signal. Ces méthodes exploitent, pour la plupart, la présence du préfixe cyclique dans le signal OFDM et les propriétés de cyclostationnarité qui en découlent. Les estimateurs proposés sont basés sur la fonction d'autocorrélation du signal OFDM. On trouvera notamment un exemple d'une telle méthode d'estimation dans l'article de P. Liu et al. intitulé « A blind time-parameters estimation scheme for OFDM in multi-path channel », publié dans Proc. 2005 Int'l Conference on Information, Communications and Signal Processing, vol. 1, pp. 242-247, 23-26 Sept. 2005.

Ces méthodes d'estimation nécessitent cependant d'acquérir un nombre élevé de symboles OFDM pour effectuer le calcul de la fonction d'autocorrélation. En outre, ces méthodes ne fonctionnent pas ou mal lorsque le signal OFDM est dépourvu de préfixe cyclique.

Plusieurs méthodes ont déjà été envisagées avec succès pour estimer de manière aveugle des paramètres OFDM en absence de préfixe cyclique. Elles sont respectivement basées sur un critère à maximum de vraisemblance, un filtrage adapté et une minimisation de l'entropie en sortie d'un récepteur OFDM adaptatif. On trouvera une description de ces méthodes dans les articles de A. Bouzegzi et al., respectivement intitulés « Maximum Likelihood based methods for OFDM intercarrier characterization », IEEE International Symposium on Personal Indoor and Mobile Radio Communications (PIRMC), 2008 ; « Matched filter based algorithm for blind recognition of OFDM systems, IEEE Vehicular Technology Conference, Sept. 2008 ; et « A fourth-order based algorithm for characterization of OFDM signals », IEEE Workshop on Signal Processing and Advances in Wireless Communication (SPAWC), Juillet 2008.

Toutefois, à faible rapport signal sur bruit les méthodes précitées sont inopérantes et conduisent à des erreurs d'estimation des paramètres OFDM. En outre, elles nécessitent de connaître le rapport signal sur bruit, ce qui peut s'avérer délicat, en particulier dans un contexte opportuniste

RIBA J ET AL: "Parameter estimation of binary CPM signals", ICASSP, MAY 7 - 11, 2001, estime un paramètre inconnu d'une modulation linéaire en comparant la matrice de covariance reçue et une matrice de covariance théorique.

Aucune des méthodes précitées ne permet de déterminer conjointement les paramètres OFDM et le rapport signal sur bruit. Or, une telle méthode d'estimation permettrait à un récepteur de déterminer rapidement l'état du canal OFDM et de retourner à l'émetteur une information dite CSI (*Channel State Information*) le décrivant. L'information CSI est avantageusement utilisée par l'émetteur pour effectuer un ordonnancement de fréquences, une adaptation de liaison, etc.

Le but de la présente invention est par conséquent de proposer une méthode d'estimation de paramètres de modulation d'un signal OFDM, avec un taux de succès élevé, même à faible rapport signal sur bruit et ce, que le signal soit ou non dépourvu de préfixe.

Un but subsidiaire de la présente invention est de permettre à un récepteur d'effectuer une estimation conjointe des paramètres OFDM et du rapport signal sur bruit.

**EXPOSÉ DE L'INVENTION**

La présente invention est définie par une méthode d'estimation d'au moins un paramètre de modulation d'un signal OFDM, ledit signal étant échantillonné pendant une fenêtre temporelle pour fournir une séquence d'échantillons, dans laquelle :

(a) on regroupe des échantillons consécutifs de ladite séquence, en fonction d'une valeur testée du dit paramètre, pour former une pluralité de vecteurs ;
(b) on estime la matrice de covariance des vecteurs ainsi obtenus ;
(c) on calcule la matrice de covariance théorique que l'on obtiendrait à partir d'un signal OFDM dont ledit paramètre de modulation aurait ladite valeur testée ;
(d) on mesure une distance entre la matrice de covariance et la matrice de covariance théorique ; et en ce que l'on itère les étapes (a), (b), (c) et (d), la valeur estimée du paramètre étant celle réalisant la distance la plus faible à l'étape (d).

Selon une variante de réalisation, la matrice de covariance théorique est obtenue en fonction de ladite valeur testée du paramètre de modulation, d'une valeur testée de la puissance du signal et d'une valeur testée de la puissance de bruit, les étapes (c) et (d) étant alors itérées pour une pluralité de valeurs testées de puissance de signal et de bruit.

Avantageusement, la méthode d'estimation peut également fournir une estimation du rapport signal sur bruit à partir des valeurs de puissance de signal et de bruit minimisant ladite distance conjointement avec la valeur estimée de paramètre de modulation.

La matrice de covariance théorique peut être calculée au moyen de :

$$\mathbf{R}_{yy}\left(\tilde{\theta}, \tilde{\sigma}_a, \tilde{\sigma}_b\right) = \tilde{\sigma}_a^2 \mathbf{F}_{\tilde{\theta}} \mathbf{F}_{\tilde{\theta}}^H + \tilde{\sigma}_b^2 \mathbf{I}_{\tilde{\theta}}$$

où $\tilde{\theta}$, $\tilde{\sigma}_a^2$, $\tilde{\sigma}_b^2$ sont respectivement les valeurs testées du paramètre de modulation, de la puissance de signal et de la puissance de bruit ; $\mathbf{I}_{\tilde{\theta}}$ est la matrice unité de taille $\tilde{N} \times \tilde{N}$ où $\tilde{N}$ est le nombre de sous-porteuses du multiplex OFDM, connu ou supposé, et la matrice $\mathbf{F}_{\tilde{\theta}}$ est une matrice de taille $\tilde{P} \times \tilde{N}$ avec $\tilde{P} = \left\lfloor \left(\widetilde{NT_c} + \widetilde{DT_c}\right) / \tilde{T}_e \right\rfloor$, dont les éléments sont donnés par :

$$F_{m,n}^{\tilde{\theta}} = \frac{1}{\sqrt{\tilde{N}}} e^{-2i\pi nm \frac{T_e}{\widetilde{NT_c}}} e^{-2i\pi n \frac{\widetilde{DT_c}}{\widetilde{NT_c}}}$$

où $\widetilde{NT_c}$ est la durée utile des symboles OFDM, connue ou testée, $\widetilde{DT_c}$ est la durée du préfixe des symboles OFDM, connue ou testée, et $T_e$ est la période d'échantillonnage du signal OFDM.

La matrice de covariance quant à elle peut être estimée par :

$$\widehat{\mathbf{R}}_{yy}\left(\tilde{\theta}\right) = \frac{1}{\tilde{K}} \sum_{k=0}^{\tilde{K}-1} \mathbf{y}_k \mathbf{y}_k^H$$

où $y_k = (y_{k,0}, \ldots y_{k,\tilde{P}-1})^T$ est le $k$ième vecteur de ladite pluralité de vecteurs, $y_{k,p} = y_a\left(pT_e + \widetilde{DT_c} + k\left(\widetilde{NT_c} + \widetilde{DT_c}\right)\right)$

où $\widetilde{NT_c}$ est la durée utile des symboles OFDM, connue ou testée, $\widetilde{DT_c}$ est la durée du préfixe des symboles OFDM, connue ou testée, $T_e$ est la période d'échantillonnage du signal OFDM et $\tilde{K} = \left\lfloor \frac{M}{\tilde{P}} \right\rfloor$ avec $\tilde{P} = \left\lfloor \left(\widetilde{NT_c} + \widetilde{DT_c}\right) / \tilde{T}_e \right\rfloor$ et $M$ est le nombre total d'échantillons dans la fenêtre temporelle.

La distance entre la matrice de covariance et la matrice de covariance théorique peut être calculée au moyen de :

$$J_{COMET}\left(\tilde{\theta}, \tilde{\sigma}_a, \tilde{\sigma}_b\right) = \left\| \widehat{\mathbf{R}}_{yy}\left(\tilde{\theta}\right) - \mathbf{R}_{yy}\left(\tilde{\theta}, \tilde{\sigma}_a, \tilde{\sigma}_b\right) \right\|_F^2$$

où $\|.\|_F$ est la norme de Frobenius.

Alternativement, la distance entre la matrice de covariance et la matrice de covariance théorique peut être calculée au moyen de :

$$J_{MCOMET}\left(\tilde{\theta}, \tilde{\sigma}_a, \tilde{\sigma}_b\right) = \frac{\tilde{K}}{\tilde{P}^2} \left\| \widehat{\mathbf{R}}_{yy}\left(\tilde{\theta}\right) - \mathbf{R}_{yy}\left(\tilde{\theta}, \tilde{\sigma}_a, \tilde{\sigma}_b\right) \right\|_F^2$$

où $\|.\|_F$ est la norme de Frobenius.

Le paramètre de modulation peut être la durée totale d'un symbole OFDM, la durée utile d'un symbole OFDM, la durée du préfixe d'un symbole OFDM, le nombre de sous-porteuses d'un symbole OFDM.

Ladite méthode d'estimation peut être également appliquée à un ensemble des paramètres de modulation constitué de la durée utile d'un symbole OFDM, de la durée de préfixe d'un symbole OFDM et du nombre de sous-porteuses du multiplex OFDM, les valeurs estimées de ces paramètres étant alors les valeurs testées minimisant conjointement ladite distance.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente de manière schématique un signal OFDM ;

La Fig. 2 représente de manière schématique un récepteur OFDM connu de l'état de la technique ;

La Fig. 3 représente un organigramme de la méthode d'estimation d'un paramètre de modulation OFDM selon l'invention ;

La Fig. 4 représente un organigramme de la méthode d'estimation de paramètres de modulation OFDM selon un premier mode de réalisation de l'invention ;

La Fig. 5 représente un premier exemple de fonction de coût utilisée dans la méthode de la Fig. 4;

La Fig. 6 représente un second exemple de fonction de coût utilisée dans la méthode de la Fig. 4;

La Fig. 7 représente un premier exemple de fonction de coût normalisée utilisée dans un second mode de réalisation de l'invention ;

La Fig. 8 représente un second exemple de fonction de coût normalisée utilisée dans le second mode de réalisation de l'invention ;

La Fig. 9 donne le taux de bonne estimation d'un paramètre de modulation OFDM en fonction du rapport signal sur bruit, dans le cas d'une estimation conjointe ;

La Fig. 10 donne le taux de bonne estimation de la variance du signal en fonction de ce même rapport, dans le cas d'une estimation conjointe ;

La Fig. 11 compare plusieurs méthodes d'estimation d'un paramètre OFDM en fonction du rapport signal sur bruit, dans le cas d'une synchronisation parfaite du récepteur et pour une faible durée de préfixe ;

La Fig. 12 compare plusieurs méthodes d'estimation d'un paramètre OFDM en fonction du rapport signal sur bruit, dans le cas d'une synchronisation parfaite du récepteur et en absence de préfixe ;

La Fig. 13 compare plusieurs méthodes d'estimation d'un paramètre OFDM en fonction du rapport signal sur bruit, en absence de synchronisation du récepteur et en absence de préfixe.

## EXPOSÉ DÉTAILLÉ DE MODES DE RÉALISATION PARTICULIERS

Nous considérerons dans la suite le cas d'un système de télécommunication utilisant une modulation OFDM. Nous supposerons que le signal OFDM émis a la forme donnée par l'expression (1) et que les symboles d'information peuvent être représentés par des variables aléatoires indépendantes, identiquement distribuées et prenant leurs valeurs dans un alphabet de modulation *M*-aire.

Après démodulation en bande de base, le signal reçu est échantillonné à une fréquence $f_e = \dfrac{1}{T_e}$, supérieure à la largeur de la bande OFDM considérée pour satisfaire au critère de Nyquist. Ainsi, l'on est certain que la période d'échantillonnage $T_e$ est inférieure à la période chip $T_c$. Soit $T_0$ la durée de la fenêtre d'observation, le signal à temps discret obtenu est composé de $M_0 = \left\lfloor \dfrac{T_0}{T_e} \right\rfloor$ échantillons (où $\lfloor x \rfloor$ désigne le plus grand entier inférieur à $x$).

Si le récepteur connaît les paramètres $NT_c$, $DT_c$ et $N$ du signal OFDM, les échantillons peuvent être regroupés par symboles OFDM de taille $P = \lfloor (NT_c + DT_c)/T_e \rfloor$ et l'expression (2) peut être alors réécrite sous forme vectorielle:

$$\mathbf{y_k} = \mathbf{Ga_k} + \mathbf{b} \tag{4}$$

où $\mathbf{a_k}$ est le $k$-ième vecteur de taille $N$ des symboles transmis, $\mathbf{b}$ est un vecteur de taille $P$, représentant le bruit, supposé additif et gaussien et $\mathbf{y_k}$ est un vecteur de taille $P$ constitué de $P$ échantillons consécutifs $y_{k,p} = y_a(pT_e + DT_c + k(NT_c + DT_c))$, $p = 0,...,P\text{-}1$. Les $P$ échantillons de bruit sont des variables aléatoires indépendantes entre elles et du signal utile ; $\mathbf{G} = \mathbf{HF}$ où $\mathbf{H}$ est la matrice de taille $N \times N$ représentative de la réponse fréquentielle du canal et $\mathbf{F}$ est une matrice de taille $P \times N$ dont les éléments sont donnés par :

$$F_{m,n} = \frac{1}{\sqrt{N}} e^{-2i\pi nm \frac{T_e}{NT_c}} e^{-2i\pi n \frac{DT_c}{NT_c}} \tag{5}$$

Par souci de simplification, mais sans perte de généralité, on supposera dans la suite que le canal de transmission est sans évanouissement, autrement dit que la matrice $\mathbf{H}$ est égale à la matrice identité à un coefficient multiplicatif près. La relation (4) peut alors s'écrire sous la forme:

$$\mathbf{y_k} = \mathbf{Fa_k} + \mathbf{b} \tag{6}$$

Considérons maintenant le cas où le récepteur opère en aveugle. Les paramètres $NT_c$, $DT_c$ et $N$, caractérisant le signal OFDM sont alors des inconnues que l'on peut regrouper sous la forme d'un paramètre à estimer $\tilde{\theta} = \left( \widetilde{NT_c}, \widetilde{DT_c}, \widetilde{N} \right)$.

Les échantillons du signal OFDM reçus par le récepteur sont regroupés sous forme de vecteurs de taille $\tilde{P} = \left\lfloor \left( \widetilde{NT_c} + \widetilde{DT_c} \right) / \tilde{T}_e \right\rfloor$, notés $\mathbf{y}_{\tilde{\theta}k}$, avec:

$$\mathbf{y}_{\tilde{\theta}k} = \mathbf{F}_{\tilde{\theta}} \mathbf{a}_{\tilde{\theta}k} + \mathbf{b}_{\tilde{\theta}k} \tag{7}$$

où, de manière similaire à la relation (6), $\mathbf{a}_{\tilde{\theta}k}$ est le vecteur de taille $\tilde{N}$ des symboles transmis, $\mathbf{b}_{\tilde{\theta}k}$ est un vecteur de taille $\tilde{P}$ représentant les échantillons de bruit additif gaussien, et $\mathbf{F}_{\tilde{\theta}}$ est la matrice de taille $\tilde{P} \times \tilde{N}$ dont les éléments sont donnés par :

$$F_{m,n}^{\tilde{\theta}} = \frac{1}{\sqrt{\tilde{N}}} e^{-2i\pi nm \frac{T_e}{\widetilde{NT_c}}} e^{-2i\pi n \frac{\widetilde{DT_c}}{\widetilde{NT_c}}} \tag{8}$$

On comprendra que $\mathbf{y}_{\tilde{\theta}k}$ est un vecteur de $\tilde{P}$ variables aléatoires dont la matrice de covariance vaut :

$$\mathbf{R}_{\mathbf{yy}}\left(\tilde{\theta},\sigma_{a},\sigma_{b}\right) = E\left(\mathbf{y}_{\tilde{\theta}}\mathbf{y}_{\tilde{\theta}}^{H}\right) = \sigma_{a}^{2}\mathbf{F}_{\tilde{\theta}}\mathbf{F}_{\tilde{\theta}}^{H} + \sigma_{b}^{2}\mathbf{I}_{\tilde{\theta}} \qquad (9)$$

où $\sigma_{a}^{2}$ et $\sigma_{b}^{2}$ représentent respectivement la variance des symboles transmis et du bruit, et $\mathbf{I}_{\tilde{\theta}}$ est la matrice unité de taille $\tilde{N} \times \tilde{N}$. Avec ces conventions, le rapport $\sigma_{a}^{2}/\sigma_{b}^{2}$ n'est autre que le rapport signal sur bruit. La matrice de covariance dépend de manière générale du paramètre $\tilde{\theta}$ et des puissances respectives du signal utile et du bruit.

L'idée à la base de la présente invention est d'estimer au moins un paramètre de modulation du signal OFDM en utilisant une méthode d'adaptation de la covariance.

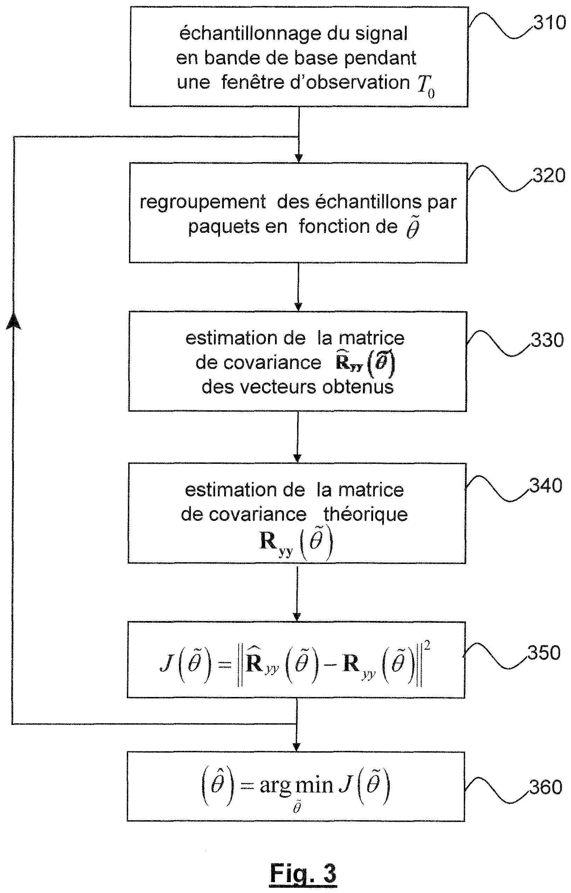

La Fig. 3 représente de manière générale un organigramme de la méthode d'estimation d'un paramètre de modulation OFDM selon l'invention.

A l'étape 310, on échantillonne le signal OFDM en bande de base pendant une fenêtre temporelle de largeur donnée. On obtient ainsi une séquence d'échantillons.

A l'étape 320, on regroupe par paquets des échantillons de la séquence ainsi obtenue, en fonction d'une valeur testée, $\tilde{\theta}$, du paramètre à estimer, chaque paquet étant formé par des échantillons consécutifs de ladite séquence et étant représenté par un vecteur noté $\mathbf{y}_{\tilde{\theta}k}$.

A l'étape 330, on estime la matrice de covariance $\hat{\mathbf{R}}_{\mathbf{yy}}(\tilde{\theta})$ des vecteurs ainsi obtenus.

A l'étape 340, on calcule ensuite la matrice de covariance théorique $\mathbf{R}_{\mathbf{yy}}(\tilde{\theta})$ que l'on obtiendrait à partir d'un signal OFDM dont ledit paramètre de modulation aurait ladite valeur testée $\tilde{\theta}$.

A l'étape 350, on calcule une distance entre la matrice de covariance en 330 et la matrice de covariance théorique obtenue en 340.

Les étapes 320 à 350 sont répétées pour une pluralité de valeurs possibles du paramètre $\tilde{\theta}$. la valeur estimée, $\hat{\theta}$, de ce paramètre est obtenue en 360 comme celle minimisant la distance calculée à l'étape 350.

L'homme du métier comprendra que l'on obtient la valeur $\hat{\theta}$ qui conduit à la matrice de covariance estimée la plus proche de la matrice de covariance théorique.

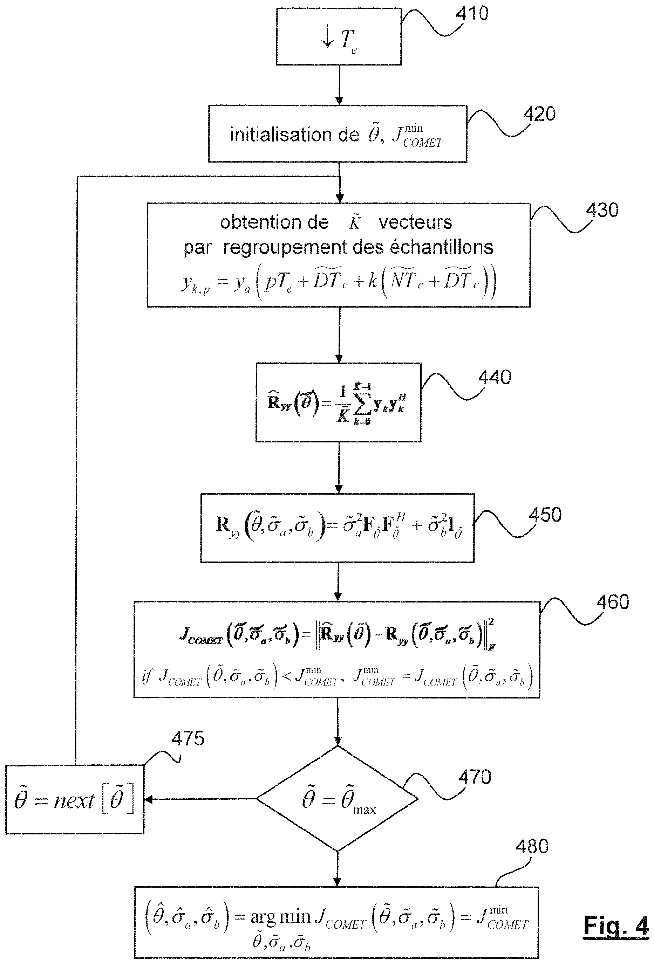

La Fig. 4 représente de manière plus détaillée la méthode d'estimation d'au moins un paramètre de modulation OFDM selon un premier mode de réalisation de l'invention.

A l'étape 410, on échantillonne le signal reçu en bande de base, $y$, pendant une fenêtre temporelle de largeur $T_{0}$. La période d'échantillonnage $T_{e}$ est choisie suffisamment faible pour respecter le critère de Nyquist, compte tenu de la largeur de bande OFDM d'intérêt. On obtient ainsi une séquence de $M_{0}$ échantillons.

A l'étape 420, on choisit une valeur à tester du paramètre $\tilde{\theta}$, c'est-à-dire des valeurs de durée utile $\widetilde{NT_{c}}$, de durée de préfixe $\widetilde{DT_{c}}$, et de nombre de sous-porteuses $\tilde{N}$. On choisit également une valeur de puissance du signal transmis $P_{a} = \tilde{\sigma}_{a}^{2}$ et une valeur de puissance de bruit $P_{b} = \tilde{\sigma}_{b}^{2}$. Ce choix peut être aveugle ou semi-aveugle si le récepteur connaît l'une des valeurs précitées.

On choisit aussi une valeur $J_{COMET}^{min}$ arbitrairement grande.

A l'étape 430, on regroupe des échantillons consécutifs de la séquence pour former $\tilde{K}$ vecteurs $\mathbf{y}_{k}$, $k = 0,...,\tilde{K}$-1, avec $\tilde{K} = \left\lfloor \dfrac{M}{\tilde{P}} \right\rfloor$, de taille $\tilde{P} = \left\lfloor \left(\widetilde{NT_{c}} + \widetilde{DT_{c}}\right)/\tilde{T}_{e} \right\rfloor$. Les $\tilde{P}$ composantes $y_{k,p}$, $p = 0,..., \tilde{P}$-1 du vecteur $\mathbf{y}_{k}$ sont donc obtenues par :

$$y_{k,p} = y_{a}\left(pT_{e} + \widetilde{DT_{c}} + k\left(\widetilde{NT_{c}} + \widetilde{DT_{c}}\right)\right) \qquad (10)$$

La valeur testée du paramètre de modulation, $\tilde{\theta}$, détermine la taille de ces vecteurs ainsi que leurs points de départ dans la séquence.

A l'étape 440, on estime la matrice de covariance $\mathbf{R}_{\mathbf{yy}}(\tilde{\theta})$ en calculant :

$$\widehat{\mathbf{R}}_{yy}\left(\tilde{\theta}\right) = \frac{1}{\tilde{K}}\sum_{k=0}^{\tilde{K}-1}\mathbf{y}_k\mathbf{y}_k^H \qquad (11)$$

avec $\mathbf{y}_k = (y_{k,0},...y_{k,\tilde{P}-1})^T$.

A l'étape 460, on détermine la distance, au sens de la norme de Frobenius, entre la matrice de covariance $\widehat{\mathbf{R}}_{yy}(\tilde{\theta})$ estimée à partir de (11) et la matrice $\mathbf{R}_{yy}(\tilde{\theta})$ théorique obtenue préalablement en 450 par :

$$\mathbf{R}_{yy}\left(\tilde{\theta},\tilde{\sigma}_a,\tilde{\sigma}_b\right) = \tilde{\sigma}_a^2\mathbf{F}_{\tilde{\theta}}\mathbf{F}_{\tilde{\theta}}^H + \tilde{\sigma}_b^2\mathbf{I}_{\tilde{\theta}} \qquad (12)$$

où $\tilde{\sigma}_a^2$ est une valeur testée de la puissance du signal et $\tilde{\sigma}_b^2$ est une valeur testée de la puissance de bruit.

On rappelle que la norme de Frobenius d'une matrice **A** est définie par $\|\mathbf{A}\| = Tr(\mathbf{A}^H\mathbf{A})$ où $Tr(.)$ est la fonction trace, autrement dit on calcule la valeur de la fonction de coût définie par :

$$J_{COMET}\left(\tilde{\theta},\tilde{\sigma}_a,\tilde{\sigma}_b\right) = \left\|\widehat{\mathbf{R}}_{yy}\left(\tilde{\theta}\right) - \mathbf{R}_{yy}\left(\tilde{\theta},\tilde{\sigma}_a,\tilde{\sigma}_b\right)\right\|_F^2 \qquad (13)$$

On compare cette valeur à la valeur $J_{COMET}^{min}$ et si $J_{COMET}\left(\tilde{\theta},\tilde{\sigma}_a,\tilde{\sigma}_b\right) < J_{COMET}^{min}$ l'on met à jour $J_{COMET}^{min}$ par $J_{COMET}^{min} = J_{COMET}\left(\tilde{\theta},\tilde{\sigma}_a,\tilde{\sigma}_b\right)$ et l'on stocke les valeurs $(\theta,\tilde{\sigma}_a,\tilde{\sigma}_b)$ correspondantes dans une zone de mémoire.

A l'étape 470, on vérifie si l'on a parcouru un ensemble ordonné prédéfini de paramètres $(\theta,\tilde{\sigma}_a,\tilde{\sigma}_b)$. A défaut, on passe à l'élément suivant de cet ensemble en 475 et l'on retourne à l'étape 430. Cet ensemble ordonné est par exemple le produit cartésien d'ensembles élémentaires $\Pi_\theta \times \Pi_{\sigma_a} \times \Pi_{\sigma_b}$ où $\Pi_\theta$ est un ensemble de valeurs possibles du paramètres prévues par une norme OFDM, et $\Pi_{\sigma_a}$, $\Pi_{\sigma_b}$ sont des intervalles de valeurs de puissance. La relation d'ordre sur cet ensemble peut être l'ordre lexicographique.

A l'étape 480, on estime les valeurs des paramètres $\theta$, $\sigma_a$, $\sigma_b$ à l'aide de :

$$\left(\hat{\theta},\hat{\sigma}_a,\hat{\sigma}_b\right) = \underset{\tilde{\theta},\tilde{\sigma}_a,\tilde{\sigma}_b}{\arg\min}\, J_{COMET}\left(\tilde{\theta},\tilde{\sigma}_a,\tilde{\sigma}_b\right) \qquad (14)$$

autrement dit, on récupère les valeurs de ces paramètres dans la zone mémoire précitée.

On comprend que la méthode d'estimation représentée en Fig. 4 permet d'estimer conjointement les paramètres de modulation du signal OFDM (représentés par $\theta$) ainsi que les niveaux de puissance de signal et de bruit. Cette méthode permet par conséquent non seulement de déterminer $NT_c$, $DT_c$ et $N$ mais aussi par exemple le rapport signal sur bruit $\sigma_a^2/\sigma_b^2$ .

Il est clair pour l'homme du métier que si certains paramètres de modulation sont déjà connus du récepteur, les valeurs connues de ces paramètres remplacent leurs valeurs testées $(\theta,\tilde{\sigma}_a,\tilde{\sigma}_b)$ dans le calcul des expressions (12) et (13). Dans ce cas, la dimension correspondante du pavé n'est pas parcourue en 475.

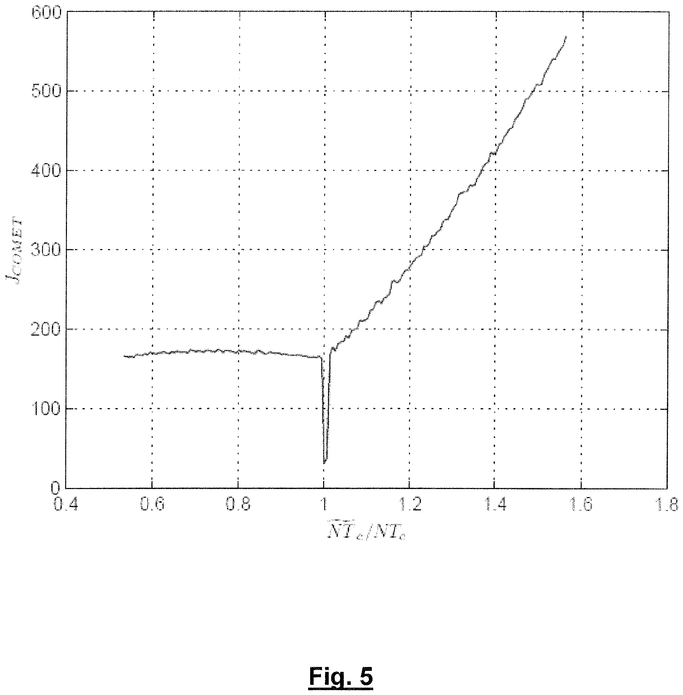

On a illustré en Fig. 5 un exemple de la fonction de coût $J_{COMET}$ en fonction de la variable réduite $\dfrac{\widetilde{NT_c}}{NT_c}$ dans le cas où seul le paramètre $\widetilde{NT_c}$ est supposé inconnu, les autres paramètres prenant les valeurs connues, $\widetilde{DT_c} = DT_c$, $\tilde{N} = N$, $\tilde{\sigma}_a = \sigma_a$ ; $\tilde{\sigma}_b = \sigma_b$. Le rapport signal sur bruit $\sigma_a^2/\sigma_b^2$ est ici égal à 10 dB. On remarque que la fonction de coût $J_{COMET}$ est convexe et présente un minimum prononcé en $\widetilde{NT_c} = NT_c$, ce qui permet une estimation précise de la longueur utile du symbole OFDM. De manière similaire, si la longueur utile était connue et si l'on recherchait par exemple la longueur de préfixe ou le nombre de sous-porteuses, la fonction de coût aurait encore un minimum prononcé pour la valeur réelle correspondante.

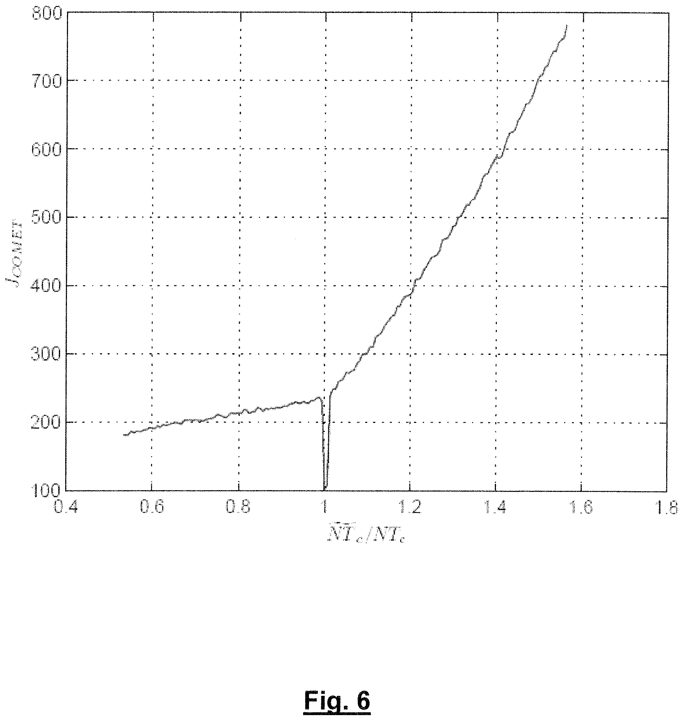

La Fig. 6 représente un autre exemple de fonction de coût dans les mêmes conditions que la Fig. 5, à la différence près que le rapport signal sur bruit est ici égal à 0 dB, autrement dit $\sigma_a = \sigma_b$. On remarque que la fonction de coût présente toujours un minimum pour $\widetilde{NT_c} = NT_c$ mais qu'en revanche elle n'est plus convexe. De manière plus générale, on constate que la fonction de coût perd sa propriété de convexité aux faibles niveaux de rapport signal sur bruit. Cette absence de convexité peut être préjudiciable à la recherche du minimum de la fonction, par exemple si la cette recherche n'est pas effectuée au moyen d'un balayage systématique mais d'une descente de gradient.

Dans le cas d'un faible rapport signal sur bruit, on préfère utiliser un second mode de réalisation décrit ci-après.

Le second mode de réalisation met en oeuvre une fonction de coût normalisée définie par :

$$J_{MCOMET}\left(\tilde{\theta},\tilde{\sigma}_a,\tilde{\sigma}_b\right)=\frac{J_{COMET}\left(\tilde{\theta},\tilde{\sigma}_a,\tilde{\sigma}_b\right)}{E\left(J_{COMET}\left(\tilde{\theta},\tilde{\sigma}_a,\tilde{\sigma}_b\right)\right)} \qquad (15)$$

où $E(J_{COMET}(\theta,\tilde{\sigma}_a,\tilde{\sigma}_b))$ désigne la moyenne de la fonction de coût. On peut montrer que pour les faibles valeurs de rapport signal sur bruit, c'est-à-dire pour $\sigma_a \ll \sigma_b$, cette moyenne vaut :

$$E\left(J_{COMET}\left(\tilde{\theta},\tilde{\sigma}_a,\tilde{\sigma}_b\right)\right)=\frac{\tilde{P}^2}{\tilde{K}}\sigma_b^4 \qquad (16)$$

Etant donné que $\sigma_b$ est une constante, la fonction de coût normalisée peut se réduire à :

$$J_{MCOMET}\left(\tilde{\theta},\tilde{\sigma}_a,\tilde{\sigma}_b\right)=\frac{\tilde{K}}{\tilde{P}^2}J_{COMET}\left(\tilde{\theta},\tilde{\sigma}_a,\tilde{\sigma}_b\right) \qquad (17)$$

La méthode d'estimation selon le second mode de réalisation de l'invention diffère de celle illustrée en Fig. 4 en ce que la fonction de coût $J_{MCOMET}$ est utilisée en lieu et place de $J_{COMET}$. La description des étapes de traitement ne sera donc pas reprise ici.

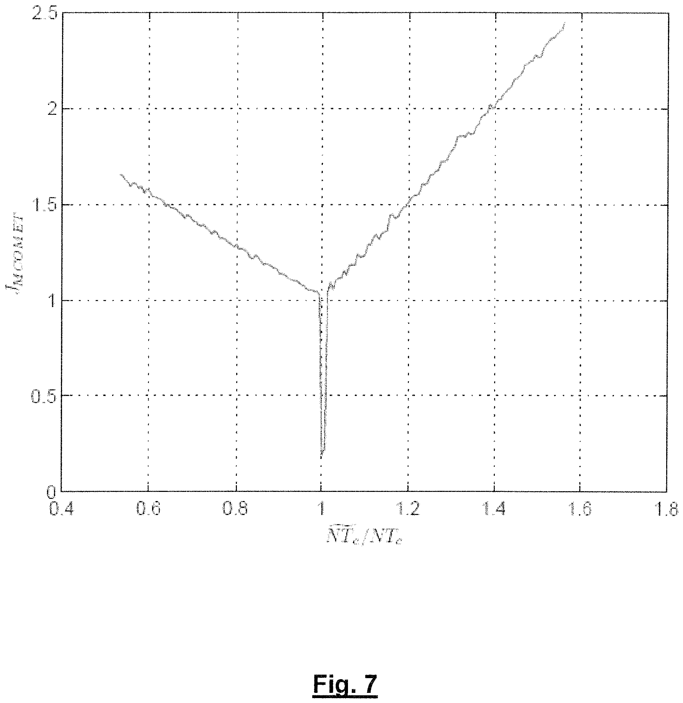

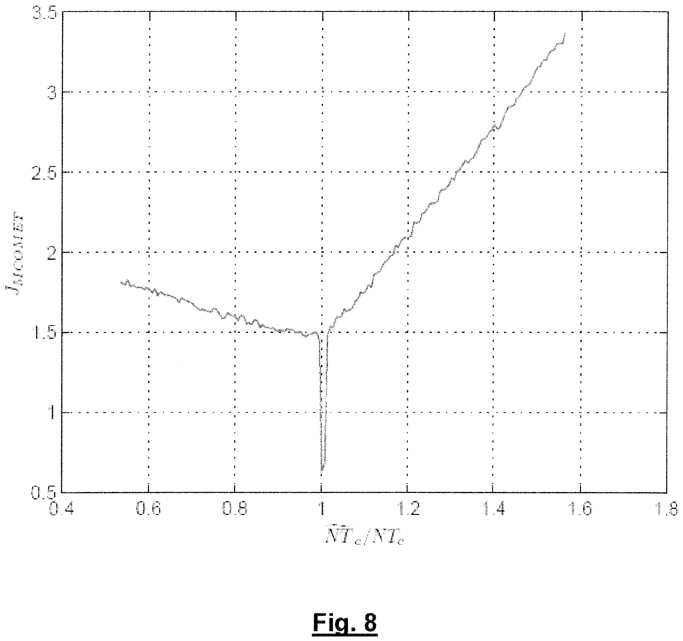

On a représenté en Fig. 7 un premier exemple de fonction de coût normalisée, dans les mêmes conditions que celles de la Fig. 5. De même, on a représenté en Fig. 8 un premier exemple de fonction de coût normalisée, dans les mêmes conditions que celles de la Fig. 6. On remarque que la fonction de coût normalisée est convexe et présente un minimum prononcé dans les deux cas, en particulier à faible niveau de rapport signal sur bruit, cf. Fig. 8. La méthode d'estimation selon le second mode de réalisation est par conséquent robuste vis-à-vis du bruit.

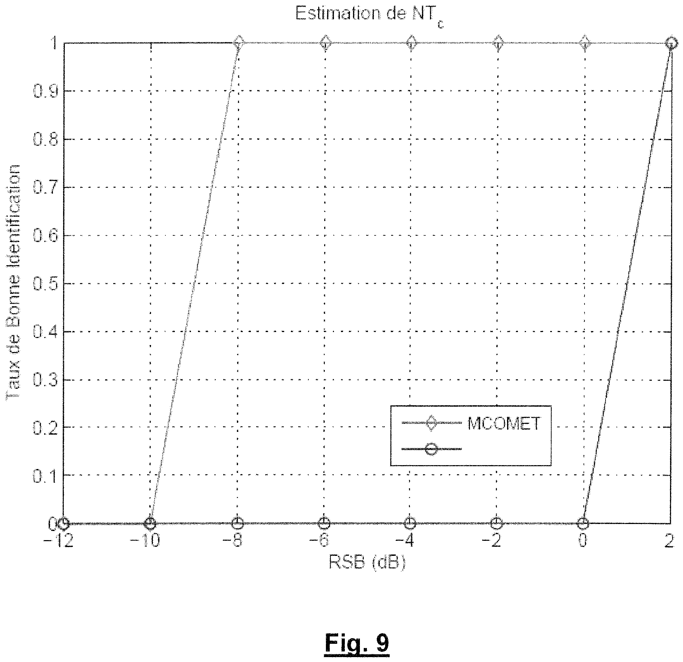

La Fig. 9 représente le taux de bonne estimation (ou encore d'identification) du paramètre $NT_c$ en fonction du rapport signal sur bruit, dans le cas d'une estimation conjointe de $NT_c$, $\sigma_a$ et $\sigma_b$. On remarque que le taux de bonne estimation est égal à 1 avec la fonction de coût normalisée $J_{MCOMET}$ dès que le rapport signal sur bruit est supérieur à -8 dB. En revanche, ce taux de bonne estimation n'est atteint avec la fonction de coût $J_{COMET}$ que pour un rapport signal sur bruit supérieur à 2 dB.

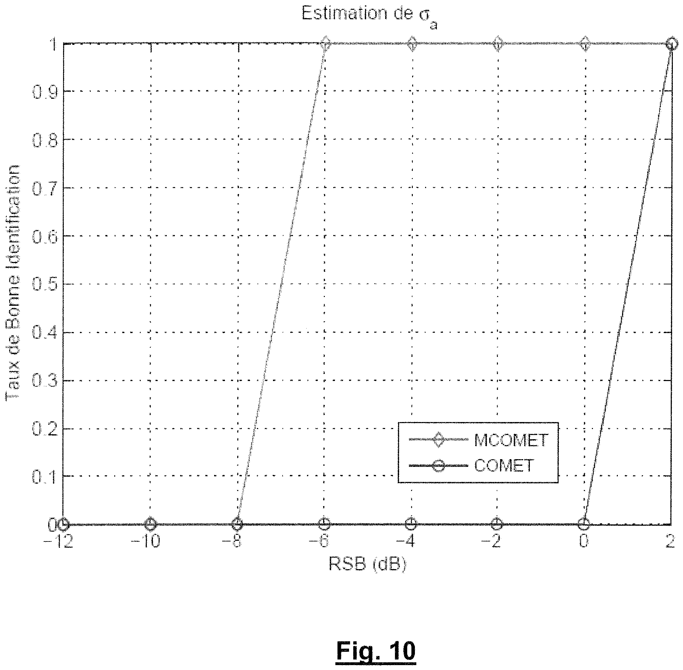

La Fig. 10 représente le taux de bonne estimation de la variance $\sigma_a$ en fonction du rapport signal sur bruit, dans le cas d'une estimation conjointe de $NT_c$, $\sigma_a$ et $\sigma_b$. On remarque là encore qu'un taux de bonne estimation égal 1 est atteint dès -8 dB pour $J_{MCOMET}$ et seulement à partir de 2 dB pour la fonction de coût $J_{COMET}$.

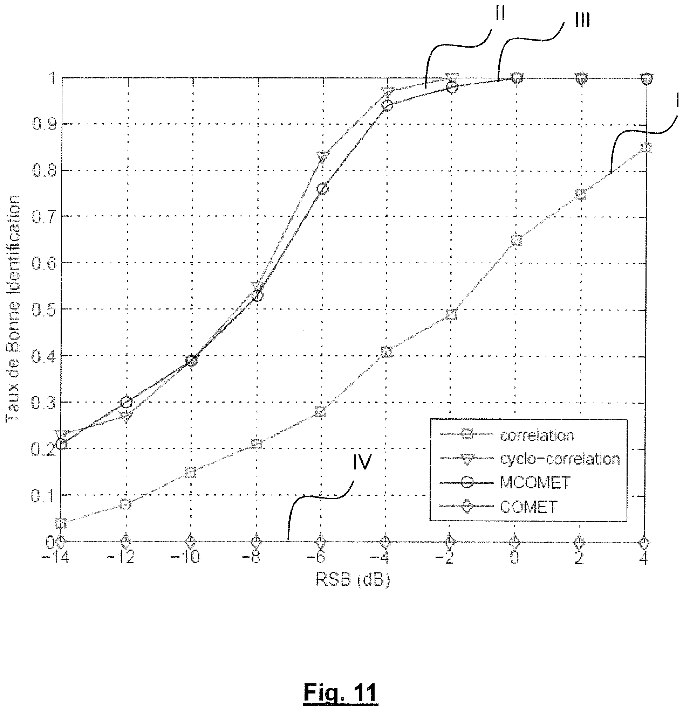

Les Figs. 11, 12 et 13 comparent les performances de différentes méthodes d'estimation d'un paramètre OFDM, ici le paramètre $NT_c$, en termes de taux de bonne estimation, en fonction du rapport signal sur bruit. On a désigné par I et II les courbes relatives aux méthodes d'estimation connues, basées respectivement sur la corrélation et la corrélation cyclique du signal reçu, telles que décrites dans l'article de A. Bouzegzi et al. intitulé « A second order statistics based algorithm for blind recognition of OFDM based systems » publié dans IEEE Global Telecommunications Conference, Nov. 2008, et par III et IV les courbes relatives respectivement au second et au premier modes de réalisation de l'invention.

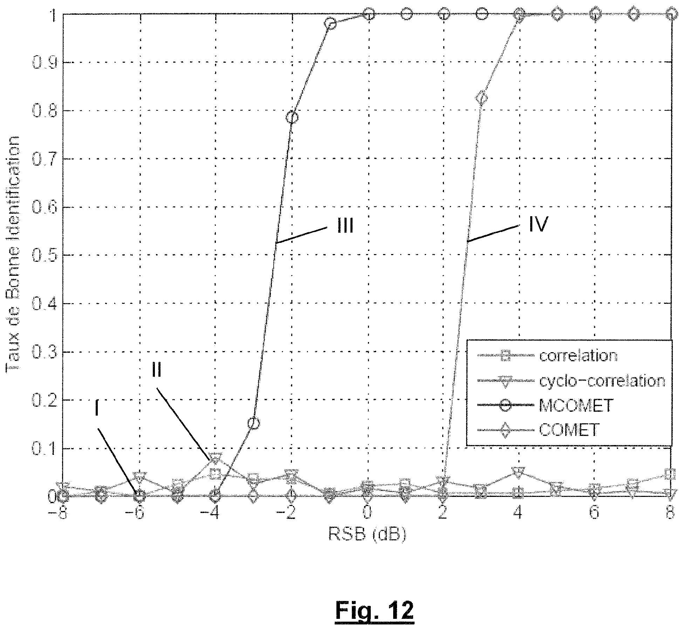

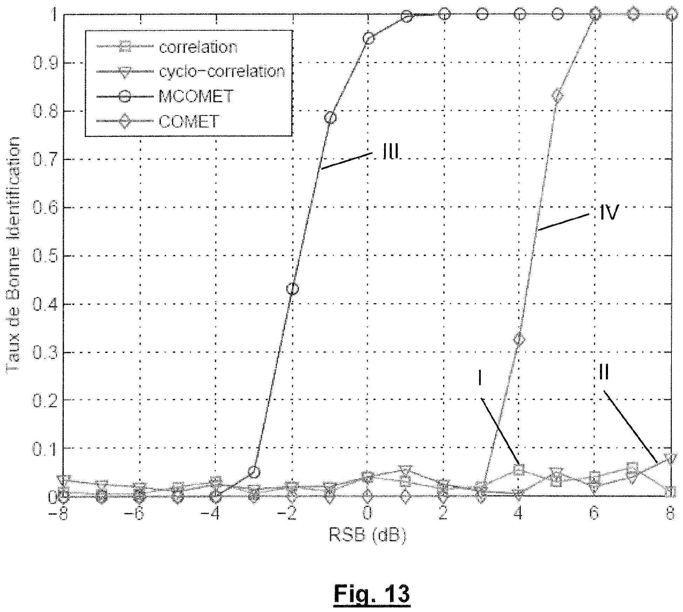

On a pris comme base de comparaison un signal OFDM de $N$ = 64 sous-porteuses, de durée utile $NT_c$ = 3.2 $\mu s$ et de rapport $T_c/T_e$ = 2. On a supposé en Fig. 11 que la durée du préfixe était égale au 1/32 ième de la durée utile du symbole OFDM (c'est-à-dire $D/N$ = 1/32). Dans les Figs. 12 et 13, on supposé que les symboles OFDM étaient dépourvus de préfixe ($D$ = 0). Enfin, dans les Figs. 11 et 12, on a supposé que le récepteur était parfaitement synchronisé sur le signal OFDM, sans offset temporel (début de la fenêtre d'échantillonnage calé sur le début d'un symbole OFDM) ni fréquentiel (fréquence de démodulation en bande de base égale à la fréquence de la porteuse). En revanche, en Fig. 13, le récepteur présente un offset temporel et un offset fréquentiel aléatoires par rapport au signal OFDM.

On notera que lorsque la durée du préfixe est courte ou lorsque le préfixe est absent les méthodes d'estimation du paramètre temporel $NT_c$ selon l'invention conduisent à des taux de bonne estimation sensiblement plus élevés qu'avec les méthodes connues de l'art antérieur. Ceci est d'ailleurs d'autant plus vrai que le préfixe est court. En cas d'absence totale de préfixe, les méthodes traditionnelles sont totalement inopérantes, cf. Fig. 12, alors que les méthodes selon l'invention continuent à donner de très bons résultats, et ce, même lorsque le récepteur n'est pas synchronisé, cf. Fig. 13.

La méthode d'estimation selon l'invention peut être mise en oeuvre dans un récepteur OFDM ou un récepteur d'utilisateur secondaire dans un système radio opportuniste, à l'aide de circuits dédiés ou de modules logiciel exécutés par un microprocesseur, de manière connue en soi.

**Revendications**

1. Méthode d'estimation d'au moins un paramètre de modulation d'un signal OFDM, ledit signal étant échantillonné pendant une fenêtre temporelle pour fournir une séquence d'échantillons, **caractérisée en ce que** :

   (a) on regroupe (310) des échantillons consécutifs de ladite séquence, en fonction d'une valeur testée ($\tilde{\theta}$) du dit paramètre, pour former une pluralité de vecteurs ;
   (b) on estime (320) la matrice de covariance des vecteurs ainsi obtenus ;
   (c) on calcule (330) la matrice de covariance théorique que l'on obtiendrait à partir d'un signal OFDM dont ledit paramètre de modulation aurait ladite valeur testée, la matrice de covariance théorique $\mathbf{R}_{yy}(\theta, \tilde{\sigma}_a, \tilde{\sigma}_b)$ étant calculée au moyen de :

$$\mathbf{R}_{yy}\left(\tilde{\theta}, \tilde{\sigma}_a, \tilde{\sigma}_b\right) = \tilde{\sigma}_a^2 \mathbf{F}_{\tilde{\theta}} \mathbf{F}_{\tilde{\theta}}^H + \tilde{\sigma}_b^2 \mathbf{I}_{\tilde{\theta}}$$

où $\tilde{\theta}$, $\tilde{\sigma}_a^2$, $\tilde{\sigma}_b^2$ sont respectivement les valeurs testées du paramètre de modulation, de la puissance de signal et de la puissance de bruit ; $\mathbf{I}_{\tilde{\theta}}$ est la matrice unité de taille $\tilde{N} \times \tilde{N}$ où $\tilde{N}$ est le nombre de sous-porteuses du multiplex OFDM, connu ou supposé, et la matrice $\mathbf{F}_{\tilde{\theta}}$ est une matrice de taille $\tilde{P} \times \tilde{N}$ avec

$$\tilde{P} = \left\lfloor \left(\widetilde{NT_c} + \widetilde{DT_c}\right) / \tilde{T}_e \right\rfloor \quad,$$

dont les éléments sont donnés par :

$$F_{m,n}^{\tilde{\theta}} = \frac{1}{\sqrt{\tilde{N}}} e^{-2i\pi nm \frac{T_e}{\widetilde{NT_c}}} e^{-2i\pi n \frac{\widetilde{DT_c}}{\widetilde{NT_c}}}$$

où $\widetilde{NT_c}$ $NT_c$ est la durée utile des symboles OFDM, connue ou testée, $\widetilde{DT_c}$ $DT_c$ est la durée du préfixe des symboles OFDM, connue ou testée, et $T_e$ est la période d'échantillonnage du signal OFDM ;
   (d) on mesure une distance (340) entre la matrice de covariance et la matrice de covariance théorique ;

et **en ce que** l'on itère les étapes (a), (b), (c) et (d), les étapes (c) et (d) étant itérées pour une pluralité de valeurs testées de puissance de signal et de bruit, la valeur estimée du paramètre étant celle réalisant la distance la plus faible à l'étape (d).

2. Méthode d'estimation selon la revendication 1, **caractérisée en ce qu'**elle fournit en outre une estimation du rapport signal sur bruit à partir des valeurs de puissance de signal et de bruit minimisant ladite distance conjointement avec la valeur estimée de paramètre de modulation.

3. Méthode d'estimation selon la revendication 1 ou 2, **caractérisée en ce que** la matrice de covariance est estimée par :

$$\widehat{\mathbf{R}}_{\mathbf{yy}}\left(\tilde{\theta}\right) = \frac{1}{\tilde{K}} \sum_{k=0}^{\tilde{K}-1} \mathbf{y}_k \mathbf{y}_k^H$$

où $\mathbf{y}_k = (y_{k,0}, \ldots y_{k,\tilde{P}-1})^T$ est le $k$ ième vecteur de ladite pluralité de vecteurs,

$$y_{k,p} = \left(pT_e + \widetilde{DT}_c + k\left(\widetilde{NT}_c + \widetilde{DT}_c\right)\right)$$ où $\widetilde{NT}_c$ est la durée utile des symboles OFDM, connue ou testée,

$\widetilde{DT}_c$ est la durée du préfixe des symboles OFDM, connue ou testée, $T_e$ est la période d'échantillonnage du signal

OFDM et $\tilde{K} = \left\lfloor \dfrac{M}{\tilde{P}} \right\rfloor$ avec $\tilde{P} = \left\lfloor \left(\widetilde{NT}_c + \widetilde{DT}_c\right)/\tilde{T}_e \right\rfloor$ et $M$ est le nombre total d'échantillons dans la fenêtre temporelle.

4. Méthode d'estimation selon la revendication 3, **caractérisée en ce que** la distance entre la matrice de covariance et la matrice de covariance théorique est calculée au moyen de :

$$J_{COMET}\left(\tilde{\theta}, \tilde{\sigma}_a, \tilde{\sigma}_b\right) = \left\| \widehat{\mathbf{R}}_{yy}\left(\tilde{\theta}\right) - \mathbf{R}_{yy}\left(\tilde{\theta}, \tilde{\sigma}_a, \tilde{\sigma}_b\right) \right\|_F^2$$

où $\|.\|_F$ est la norme de Frobenius.

5. Méthode d'estimation selon la revendication 3, **caractérisée en ce que** la distance entre la matrice de covariance et la matrice de covariance théorique est calculée au moyen de :

$$J_{MCOMET}\left(\tilde{\theta}, \tilde{\sigma}_a, \tilde{\sigma}_b\right) = \frac{\tilde{K}}{\tilde{P}^2} \left\| \widehat{\mathbf{R}}_{yy}\left(\tilde{\theta}\right) - \mathbf{R}_{yy}\left(\tilde{\theta}, \tilde{\sigma}_a, \tilde{\sigma}_b\right) \right\|_F^2$$

où $\|.\|_F$ est la norme de Frobenius.

6. Méthode d'estimation selon l'une des revendications précédentes, **caractérisée en ce que** ledit paramètre de modulation est la durée totale d'un symbole OFDM.

7. Méthode d'estimation selon l'une des revendications 1 à 5, **caractérisée en ce que** ledit paramètre de modulation est la durée utile d'un symbole OFDM.

8. Méthode d'estimation selon l'une des revendications 1 à 5, **caractérisée en ce que** ledit paramètre de modulation est la durée du préfixe d'un symbole OFDM.

9. Méthode d'estimation selon l'une des revendications 1 à 5, **caractérisée en ce que** ledit paramètre de modulation est le nombre de sous-porteuses d'un symbole OFDM.

10. Méthode d'estimation selon l'une des revendications 1 à 5, **caractérisée en ce qu'**elle est appliquée à un ensemble des paramètres de modulation constitué de la durée utile d'un symbole OFDM, de la durée de préfixe d'un symbole OFDM et du nombre de sous-porteuses du multiplex OFDM, les valeurs estimées de ces paramètres étant alors les valeurs testées minimisant conjointement ladite distance.


**Patentansprüche**

1. Verfahren zur Abschätzung wenigstens eines Modulationsparameters eines OFDM-Signals, wobei das Signal während eines Zeitfensters abgetastet wird, um eine Sequenz von Abtastwerten zu liefern, **dadurch gekennzeichnet, dass**:

(a) man aufeinanderfolgende Abtastwerte der Sequenz als Funktion eines Testwerts ($\tilde{\theta}$) des Parameters regruppiert (310),um eine Mehrzahl von Vektoren zu bilden;

(b) man die Kovarianzmatrix der derart erhaltenen Vektoren abschätzt (320);

(c) man die theoretische Kovarianzmatrix berechnet (330), die man ausgehend von einem OFDM-Signal erhalten würde, bei dem der Modulationsparameter den Testwert hätte, wobei die theoretische Kovarianzmatrix $\mathbf{R}_{yy}(\tilde{\theta}, \tilde{\sigma}_a, \tilde{\sigma}_b)$ berechnet wird mittels:

$$\mathbf{R}_{yy}\left(\tilde{\theta}, \tilde{\sigma}_a, \tilde{\sigma}_b\right) = \tilde{\sigma}_a^2 \mathbf{F}_{\tilde{\theta}} \mathbf{F}_{\tilde{\theta}}^H + \tilde{\sigma}_b^2 \mathbf{I}_{\tilde{\theta}}$$

wobei $\tilde{\theta}$, $\tilde{\sigma}_a^2$, $\tilde{\sigma}_b^2$ die Testwerte des Modulationsparameters, der Signalleistung beziehungsweise der Rauschleistung sind; $\mathbf{I}_{\tilde{\theta}}$ die Einheitsmatrix der Größe $\tilde{N} \times \tilde{N}$ ist, wobei $\tilde{N}$ die Zahl von Unterträgern des OFDM-Multiplex ist, bekannt oder geschätzt, und wobei die Matrix $\mathbf{F}_{\tilde{\theta}}$ eine Matrix der Größe $\tilde{P} \times \tilde{N}$ ist, mit

$$\tilde{P} = \left\lfloor (\widetilde{NT_c} + \widetilde{DT_c})/\tilde{T}_e \right\rfloor,$$ deren Elemente gegeben sind durch:

$$F_{m,n}^{\theta} = \frac{1}{\sqrt{\tilde{N}}} e^{-2i\pi nm\frac{T_e}{NT_c}} e^{-2i\pi n\frac{\widetilde{DT_c}}{NT_c}}$$

wobei $\widetilde{NT_c}$ die $\left(pT_e + \widetilde{DT_c} + k\left(\widetilde{NT_c} + \widetilde{DT_c}\right)\right)$ Nutzdauer der OFDM-Symbole ist, bekannt oder getestet, wobei $\widetilde{DT_c}$ die Dauer des Präfix der OFDM-Symbole ist, bekannt oder getestet, und wobei $T_e$ die Abtastperiode des OFDM-Signals ist;

(d) man einen Abstand (340) zwischen der Kovarianzmatrix und der theoretischen Kovarianzmatrix misst;

und dass man die Schritte (a), (b), (c) und (d) iteriert, wobei die Schritte (c) und (d) für eine Mehrzahl von Testwerten der Signal- und der Rauschleistung iteriert werden, wobei der abgeschätzte Wert des Parameters jener ist, der den kleinsten Abstand im Schritt (d) realisiert.

2. Abschätzverfahren nach Anspruch 1, **dadurch gekennzeichnet, dass** es ferner eine Abschätzung des Signal-/Rauschverhältnisses liefert ausgehend von den Werten der Signal- und der Rauschleistung, die den Abstand zusammen mit dem abgeschätzten Wert des Modulationsparameters minimieren.

3. Abschätzverfahren nach Anspruch 1 oder 2, **dadurch gekennzeichnet, dass** die Kovarianzmatrix abgeschätzt wird durch:

$$\hat{\mathbf{R}}_{YY}\left(\tilde{\theta}\right) = \frac{1}{\tilde{K}} \sum_{k=0}^{\tilde{K}-1} \mathbf{y}_k \mathbf{y}_k^H$$

wobei $\mathbf{y}_k = (y_{k,0},...y_{k,\tilde{P}-1})^T$ der kte Vektor der Mehrzahl von Vektoren ist, wobei $y_{k,p} =$ , wobei $\widetilde{NT_c}$ die Nutzdauer der OFDM-Symbole ist, bekannt oder getestet, wobei $\widetilde{DT_c}$ die Dauer des Präfix der OFDM-Symbole ist, bekannt oder getestet, wobei $T_e$ die Abtastperiode des OFDM-Signals ist, und wobei $\tilde{K} = \left\lfloor \frac{M}{\tilde{P}} \right\rfloor$ mit $$\tilde{P} = \left\lfloor (\widetilde{NT_c} + \widetilde{DT_c})/\tilde{T}_e \right\rfloor,$$ und wobei $M$ die Gesamtzahl von Abtastwerten in dem Zeitfenster ist.

4. Abschätzverfahren nach Anspruch 3, **dadurch gekennzeichnet, dass** der Abstand zwischen der Kovarianzmatrix und der theoretischen Kovarianzmatrix berechnet wird mittels:

$$J_{COMET}\left(\tilde{\theta},\tilde{\sigma}_a,\tilde{\sigma}_b\right)=\left\|\hat{\mathbf{R}}_{yy}\left(\tilde{\theta}\right)-\mathbf{R}_{yy}\left(\tilde{\theta},\tilde{\sigma}_a,\tilde{\sigma}_b\right)\right\|_F^2$$

wobei $\|.\|_F$ die Frobenius-Norm ist.

5. Abschätzverfahren nach Anspruch 3, **dadurch gekennzeichnet, dass** der Abstand zwischen der Kovarianzmatrix und der theoretischen Kovarianzmatrix berechnet wird mittels:

$$J_{MCOMET}\left(\tilde{\theta},\tilde{\sigma}_a,\tilde{\sigma}_b\right)=\frac{\tilde{K}}{\tilde{P}^2}\left\|\hat{\mathbf{R}}_{yy}\left(\tilde{\theta}\right)-\mathbf{R}_{yy}\left(\tilde{\theta},\tilde{\sigma}_a,\tilde{\sigma}_b\right)\right\|_F^2$$

wobei $\|.\|_F$ die Frobenius-Norm ist.

6. Abschätzverfahren nach einem der vorhergehenden Ansprüche, **dadurch gekennzeichnet, dass** der Modulationsparameter die Gesamtdauer eines OFDM-Symbols ist.

7. Abschätzverfahren nach einem der Ansprüche 1 bis 5, **dadurch gekennzeichnet, dass** der Modulationsparameter die Nutzdauer eines OFDM-Symbols ist.

8. Abschätzverfahren nach einem der Ansprüche 1 bis 5, **dadurch gekennzeichnet, dass** der Modulationsparameter die Dauer des Präfix eines OFDM-Symbols ist.

9. Abschätzverfahren nach einem der Ansprüche 1 bis 5, **dadurch gekennzeichnet, dass** der Modulationsparameter die Zahl von Unterträgern eines OFDM-Symbols ist.

10. Abschätzverfahren nach einem der Ansprüche 1 bis 5, **dadurch gekennzeichnet, dass** es auf eine Gesamtheit von Modulationsparametern angewandt wird, gebildet durch die Nutzdauer eines OFDM-Symbols, die Dauer des Präfix eines OFDM-Symbols und die Zahl von Unterträgern des OFDM-Multiplex, wobei die abgeschätzten Werte dieser Parameter dann die Testwerte sind, die zusammen den Abstand minimieren.

**Claims**

1. Method of estimating at least one modulation parameter of an OFDM signal, said signal being sampled during a time window in order to provide a sequence of samples, **characterised in that**:

   (a) consecutive samples of said sequence are grouped together (310), according to a tested value ($\tilde{\theta}$) of said parameter, in order to form a plurality of vectors;
   (b) the covariance matrix ($\hat{\mathbf{R}}_{yy}(\tilde{\theta})$) of the vectors thus obtained is estimated (320);
   (c) it is calculated (330) the theoretical covariance matrix ($\mathbf{R}_{yy}(\tilde{\theta})$) that would be obtained using an OFDM signal of which said modulation parameter would have said tested value, the theoretical covariance matrix $\mathbf{R}_{yy}(\tilde{\theta},\tilde{\sigma}_a,\tilde{\sigma}_b)$ being calculated by means of:

$$\mathbf{R}_{yy}\left(\tilde{\theta},\tilde{\sigma}_a,\tilde{\sigma}_b\right)=\tilde{\sigma}_a^2\mathbf{F}_{\tilde{\theta}}\mathbf{F}_{\tilde{\theta}}^H+\tilde{\sigma}_b^2\mathbf{I}_{\tilde{\theta}}$$

   where $\tilde{\theta}$, $\tilde{\sigma}_a^2$, $\tilde{\sigma}_b^2$ are respectively the tested values of the modulation parameter, of the signal power and of the noise power; $\mathbf{I}_{\tilde{\theta}}$ is the unit matrix of size $\tilde{N}\times\tilde{N}$ where $\tilde{N}$ is the number of sub-carriers of the OFDM multiplex, known or supposed, and the matrix $\mathbf{F}_{\tilde{\theta}}$ is a matrix size $\tilde{P}\times\tilde{N}$ with $\tilde{P}=\left\lfloor\left(\widetilde{NT_c}+\widetilde{DT_c}\right)/\tilde{T}_e\right\rfloor$,
   of which the elements are given by:

$$F_{m,n}^{\tilde{\theta}} = \frac{1}{\sqrt{\tilde{N}}} e^{-2i\pi nm\frac{T_e}{\widetilde{NT_c}}} e^{-2i\pi n\frac{\widetilde{DT_c}}{\widetilde{NT_c}}}$$

where $\widetilde{NT}_c$ is the useful duration of the OFDM symbols, known or tested, $\widetilde{DT}_c$ is the duration of the prefix of the OFDM symbols, known or tested, and $T_e$ is the sampling period of the OFDM signal ;

(d) a distance (340) is measured between the covariance matrix and the theoretical covariance matrix;

and **in that** the steps (a), (b), (c) and (d) are iterated, the steps (c) and (d) being iterated for a plurality of tested values of signal and noise power, the estimated value of the parameter being that achieving the shortest distance in the step (d).

2. Method of estimating according to claim 1, **characterised in that** it furthermore provides an estimation of the signal-to-noise ratio using power values of signal and noise minimising said distance together with the estimated value of the modulation parameter.

3. Method of estimating according to claims 1 or 2, **characterised in that** the covariance matrix is estimated by:

$$\widehat{\mathbf{R}}_{yy}\left(\tilde{\theta}\right) = \frac{1}{\tilde{K}} \sum_{k=0}^{\tilde{K}-1} \mathbf{y}_k \mathbf{y}_k^H$$

where $\mathbf{y}_k = (y_{k,0}, \ldots y_{k,\tilde{P}-1})^T$ is the $k$ th vector of said plurality of vectors, $y_{k,p} = \left( pT_e + \widetilde{DT}_c + k\left( \widetilde{NT}_c + \widetilde{DT}_c \right) \right)$

where $\widetilde{NT}_c$ is the useful duration of the OFDM symbols, known or tested, $\widetilde{DT}_c$ is the duration of the prefix of the OFDM symbols, known or tested, $T_e$ is the sampling period of the OFDM signal and $\tilde{K} = \left\lfloor \dfrac{M}{\tilde{P}} \right\rfloor$ with $\widetilde{P} = \left\lfloor \left( \widetilde{NT}_c + \widetilde{DT}_c \right) / \widetilde{T}_e \right\rfloor$ and $M$ is the total number of samples in the time window.

4. Method of estimating according to claim 3, **characterised in that** the distance between the covariance matrix and the theoretical covariance matrix is calculated by means of:

$$J_{COMET}\left(\tilde{\theta}, \tilde{\sigma}_a, \tilde{\sigma}_b\right) = \left\| \widehat{\mathbf{R}}_{yy}\left(\tilde{\theta}\right) - \mathbf{R}_{yy}\left(\tilde{\theta}, \tilde{\sigma}_a, \tilde{\sigma}_b\right) \right\|_F^2$$

where $\|.\|_F$ is the Frobenius norm.

5. Method of estimating according to claim 3, **characterised in that** the distance between the covariance matrix and the theoretical covariance matrix is calculated by means of:

$$J_{MCOMET}\left(\tilde{\theta}, \tilde{\sigma}_a, \tilde{\sigma}_b\right) = \frac{\tilde{K}}{\tilde{P}^2} \left\| \widehat{\mathbf{R}}_{yy}\left(\tilde{\theta}\right) - \mathbf{R}_{yy}\left(\tilde{\theta}, \tilde{\sigma}_a, \tilde{\sigma}_b\right) \right\|_F^2$$

where $\|.\|_F$ is the Frobenius norm.

6. Method of estimating according to one of the preceding claims, **characterised in that** said modulation parameter is the total duration of an OFDM symbol.

7. Method of estimating according to one of claims 1 to 5, **characterised in that** said modulation parameter is the useful duration of an OFDM symbol.

8. Method of estimating according to one of claims 1 to 5, **characterised in that** said modulation parameter is the duration of the prefix of an OFDM symbol.

9. Method of estimating according to one of claims 1 to 5, **characterised in that** said modulation parameter is the number of sub-carriers of an OFDM symbol.

10. Method of estimating according to one of claims 1 to 5, **characterised in that** it is applied to a set of modulation parameters comprised of the useful duration of an OFDM symbol, of the prefix duration of an OFDM symbol and of the number of sub-carriers of the OFDM multiplex, the estimated values of these parameters then being the tested values jointly minimising said distance.

$$T_{prefix} = DT_c$$

$$T_{utile} = NT_c$$

**Fig. 1**

210

$T_c \downarrow$

220

S/P

$D$

$N$

230

FFT

$N$

240

P/S

$\hat{a}_{k,n}$

**Fig. 2**

échantillonnage du signal
en bande de base pendant
une fenêtre d'observation $T_0$ — 310

regroupement des échantillons par
paquets en fonction de $\tilde{\theta}$ — 320

estimation de la matrice
de covariance $\widehat{\mathbf{R}}_{yy}(\tilde{\theta})$
des vecteurs obtenus — 330

estimation de la matrice
de covariance théorique
$\mathbf{R}_{yy}(\tilde{\theta})$ — 340

$$J(\tilde{\theta}) = \left\| \widehat{\mathbf{R}}_{yy}(\tilde{\theta}) - \mathbf{R}_{yy}(\tilde{\theta}) \right\|^2$$ — 350

$$(\hat{\theta}) = \arg\min_{\tilde{\theta}} J(\tilde{\theta})$$ — 360

**Fig. 3**

$$\downarrow T_e \quad \text{—410}$$

$$\text{initialisation de } \tilde{\theta}, J_{COMET}^{min} \quad \text{—420}$$

$$\text{obtention de } \tilde{K} \text{ vecteurs} \\ \text{par regroupement des échantillons} \\ y_{k,p} = y_a\left(pT_e + \widetilde{DT}_c + k\left(\widetilde{NT}_c + \widetilde{DT}_c\right)\right) \quad \text{—430}$$

$$\widehat{\mathbf{R}}_{yy}\left(\tilde{\theta}\right) = \frac{1}{\tilde{K}}\sum_{k=0}^{\tilde{K}-1}\mathbf{y}_k\mathbf{y}_k^H \quad \text{—440}$$

$$\mathbf{R}_{yy}\left(\tilde{\theta},\tilde{\sigma}_a,\tilde{\sigma}_b\right) = \tilde{\sigma}_a^2\mathbf{F}_{\tilde{\theta}}\mathbf{F}_{\tilde{\theta}}^H + \tilde{\sigma}_b^2\mathbf{I}_{\tilde{\theta}} \quad \text{—450}$$

$$J_{COMET}\left(\tilde{\theta},\tilde{\sigma}_a,\tilde{\sigma}_b\right) = \left\|\widehat{\mathbf{R}}_{yy}\left(\tilde{\theta}\right) - \mathbf{R}_{yy}\left(\tilde{\theta},\tilde{\sigma}_a,\tilde{\sigma}_b\right)\right\|_F^2 \\ if\ J_{COMET}\left(\tilde{\theta},\tilde{\sigma}_a,\tilde{\sigma}_b\right) < J_{COMET}^{min},\ J_{COMET}^{min} = J_{COMET}\left(\tilde{\theta},\tilde{\sigma}_a,\tilde{\sigma}_b\right) \quad \text{—460}$$

$$\tilde{\theta} = next\left[\tilde{\theta}\right] \quad \text{—475}$$

$$\tilde{\theta} = \tilde{\theta}_{max} \quad \text{—470}$$

$$\left(\hat{\theta},\hat{\sigma}_a,\hat{\sigma}_b\right) = \arg\min_{\tilde{\theta},\tilde{\sigma}_a,\tilde{\sigma}_b} J_{COMET}\left(\tilde{\theta},\tilde{\sigma}_a,\tilde{\sigma}_b\right) = J_{COMET}^{min} \quad \text{—480}$$

**Fig. 4**

**Fig. 5**

**Fig. 6**

**Fig. 7**

**Fig. 8**

Fig. 9

**Fig. 10**

**Fig. 11**

**Fig. 12**

**Fig. 13**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Cognitive radio : an integrated agent architecture for software defined radio. **J. MITOLA.** PhD Dissertation. Royal Institute of Technology, 08 Mai 2000
- **P. LIU et al.** A blind time-parameters estimation scheme for OFDM in multi-path channel. *Proc. 2005 Int'l Conference on Information, Communications and Signal Processing,* 23 Septembre 2005, vol. 1, 242-247
- **A. BOUZEGZI et al.** Maximum Likelihood based methods for OFDM intercarrier characterization. *IEEE International Symposium on Personal Indoor and Mobile Radio Communications (PIRMC),* 2008
- Matched filter based algorithm for blind recognition of OFDM systems. *IEEE Vehicular Technology Conference,* Septembre 2008
- A fourth-order based algorithm for characterization of OFDM signals. *IEEE Workshop on Signal Processing and Advances in Wireless Communication (SPAWC),* Juillet 2008
- **RIBA J et al.** Parameter estimation of binary CPM signals. *ICASSP,* 07 Mai 2001
- **A. BOUZEGZI et al.** A second order statistics based algorithm for blind recognition of OFDM based systems. *IEEE Global Telecommunications Conference,* Novembre 2008